# EUROPEAN PATENT APPLICATION

(11) **EP 1 422 641 A1**
(43) Date of publication of application: **26.05.2004**
(21) Application number: 02026392.7
(22) Date of filing: 25.11.2002
(51) Int. Cl.: G06F 17/60, H04L 12/18

(54) **Market data filtering and processing system and method**

(71) Applicant: DEUTSCHE BÖRSE AG, 60487 Frankfurt am Main (DE)
(72) Inventor: Bohnenberger, Oliver, Deutsche Börse AG, 60487 Frankfurt am Main (DE)
(74) Representative: Grünecker, Kinkeldey, Stockmair & Schwanhäusser Anwaltssozietät

(57) **Abstract**

A processor-implemented method of filtering market data generated at a market place, for providing real-time trading status information, the method comprising: providing a plurality of listings, each listing associated with a corresponding market place and traded at the associated market place; providing a set of filter criteria suitable for filtering market data to determine the trading status information; receiving market data for at least one listing of the plurality of listings associated with a specific market place; filtering the received market data in accordance with the set of filter criteria to determine in real-time, whether trading of the at least one listing has been suspended or resumed at the specific market place; and providing, in real-time, the status information indicating whether trading of the at least one listing has been suspended or resumed at the specific market place.

## Description

The present invention generally relates to techniques for processing market data and in particular to a data processing system and method of determining trading status information from market data generated at a market place.

### BACKGROUND OF THE INVENTION

Market data for a plurality of market places becomes sent out via worldwide market data dissemination systems. A typical application for market data is to display corresponding information, for example, on a vendor terminal. Market data and additional information within market data is produced at different types of market places as, for instance, at derivatives, commodity, open outcry, electronic or ECN exchanges. Market-data of different exchanges is technically discontinuous between the exchanges.

At exchanges companies are listed and corresponding securities are traded for the listed companies. Each exchange maintains so-called listings of companies, which are exchange-specific and comprise all companies for which securities are traded at the corresponding exchange, wherein an entry in a corresponding listing is provided for each company. Interchangeably, an entry in a listing representing a company is referred to as the listing of the company.

Frequently, companies become listed on a second exchange next to the main exchange, where they have been listed initially, in order to reach a broader-based public and attract additional investors. That means that the corresponding companies are listed at more than one exchange and their securities are, accordingly, traded at the main and the second exchange. Thus, at exchanges listings become traded within so called dual or double listings. For instance, at the Frankfurt Stock Exchange more than 4700 listings are traded within dual listings.

Exchanges or data vendors often calculate additional information on the market data of several, some or all of their listings, e.g., all share indices or blue chip indices.

Market data in this respect consists out of price information, statistics, master data and additional information dependent on the local trading regulations of the exchange applied to a listing and the actual trading situation. The additional information comprises information of the provider of market data. Typically, all this additional information is codified in few letters or symbols as abbreviations supporting so-called carried semantics. Examples of carried semantics are fast trading, depth on bid and offer, indication of delayed market data, and cancelled estimate.

A diversity of possible interpretations of this additional information exists. Problems arise when determining the exact meaning of an abbreviation issued from an exchange, as identical abbreviations are used in different semantics from different exchanges. Clearness about an exact meaning is in general only obtained by human expertise or by calling the issuing exchange or data vendor by phone.

The additional information is often not vital for trading of the dual listing itself. Only a very small part of the additional information is relevant for the supervision of markets. Especially suspensions, resumptions following suspensions, trading-halts, de-listing or information on renaming or changing listings identification has direct influence on the trading of the other markets.

Suspensions and trading-halts on a main exchange in respect to dual listings shall establish a suspension on the double listing at the second exchange immediately. Resuming of trading on a main exchange shall establish trading for a dual listing immediately. This is done to provide safe, regulated and transparent dealing for a listing. Suspensions usually apply to all exchange traded products derived from a suspended security i.e. related products at a derivatives exchange. Accordingly, suspension and resume information on the main exchange must rapidly be available to market supervision on the second exchange.

Current art in gaining suspension information is based on massive communication effort. Phone calls of knowing people to unaware, request of snapshot information (pull) on market data and extensive news queries are in common use. For instance, Bloomberg maintains a snapshot list of some suspension per exchange. This list can be requested per snapshot. However, this list is neither complete nor up to date.

Moreover, according to changes of regulations, trading models and listing details at the local exchanges the possible codes are changed frequently. New codes, i.e., new abbreviations for additional information are regularly introduced.

Furthermore, alternating suspension and trading with more than one suspension a day might also occur. The number of observed listings changes each day. For instance, in respect to Frankfurt Stock Exchange suspensions and trading resumes occur up to 30 times a day; typically 60 listings a day might be added and deleted and currently about 5000 listings are within observation at Frankfurt Stock Exchange. The main exchanges for the dual listings of Frankfurt Stock Exchange are NYSE, NASDAQ and Hong Kong Stock Exchange. In total the list of all main exchanges represents up to 40 different bourse organisations. The topmost five organisations represent about 3400 listings. Thus, notification of suspensions, trading-halts and de-listing for listings at other exchanges is difficult to observe for the market supervision of a specific exchange.

### SUMMARY OF THE INVENTION

Given these problems with the prior art techniques, it is the object of the present invention to provide for a data processing system and method of filtering market data generated at a market place for providing trading status information in real-time.

This object is solved by the subject matter of the independent claims. Preferred embodiments are the subject matter of the dependent claims.

The present invention provides for a technique that enables to electronically derive, obtain, observe and monitor relevant information out of available market data information. Thus, status information on suspension and trading-halts for listings at a given exchange may be generated in an automated consolidated way, on a real-time basis. Observation of suspension on listings and resumptions following a suspension is immediately available by observing the generated status information.

The generated status information is determined for a configurable number of listings, and consolidated to discrete events, i.e., market data messages. The market data messages may be provided as real-time trading status information or, e.g., summarized to an information feed. The generated real-time trading status information may be disseminated via conventional transmission technologies, for instance, via the Internet or via broadcasting.

Furthermore, the real-time trading status information, as for example, notifications of suspensions, may be provided in a self-updating manner. The trading status information may be used to be displayed for users, e.g., market supervisors on corresponding terminals in applications to notify market supervision in real-time push modus.

It may be particularly useful to provide the real-time trading status information by means of an alert message via a so-called pop-up window that can only be closed through user interaction, so as to guarantee that the user noticed the alert.

If the real-time trading status information and the market data for a dual listing are disseminated within the same system, an interconnection between market data of the dual listing and observed information on other listings is possible. The observed new information can be attached to the market data in an automated way, e.g., with a new code with the meaning of "suspended on the other/main exchange" or "resumed trading on the other/main exchange".

According to an aspect of the present invention, there is provided a processor-implemented method of filtering market data generated at a market place, for providing real-time trading status information. The method comprises providing a plurality of listings, each listing associated with a corresponding market place and traded at the associated market place; providing a set of filter criteria suitable for filtering market data to determine the trading status information; receiving market data for at least one listing of the plurality of listings associated with a specific market place; filtering the received market data in accordance with the set of filter criteria to determine in real-time, whether trading of the at least one listing has been suspended or resumed at the specific market place; and providing, in real-time, the status information indicating whether trading of the at least one listing has been suspended or resumed at the specific market place.

The received market data is preferably real-time market data. The market place may be a financial, stock, derivatives or commodity exchange, ECN or any other market place that generates market data subjected to electronic dissemination.

The providing of the plurality of listings may comprise providing a plurality of dual listings, each dual listing associated with a primary market place and a secondary market place and traded at the primary and secondary market places. Accordingly, the market data may be received for at least one dual listing of the plurality of dual listings associated with a specific primary market place representing the specific market place. Thus, providing of the status information may comprise providing to the secondary market place, in real-time, the status information indicating whether trading of the at least one dual listing has been suspended or resumed at the specific primary market place.

The set of filter criteria comprises at least one of a filter criteria for filtering the market data to determine occurrence of at least one predetermined trading suspension code; a filter criteria for filtering the market data to determine occurrence of at least one predetermined trading resume code; a filter criteria for filtering the market data to determine a market type; and a filter criteria for filtering the market data to determine a data field of the market data to be filtered.

The market data may comprise a first plurality of codes from a multiplicity of available codes. Furthermore, at least one filter criteria of the set of filter criteria may comprise a second plurality of codes from the multiplicity of available codes. The filtering of the received market data may comprise comparing the codes of the first plurality of codes with the codes of the second plurality of codes to determine whether a match occurs. The codes of the second plurality of codes may be trading suspension codes or trading resume codes.

Alternatively, the market data may comprise a first plurality of codes from a multiplicity of available codes, at least one filter criteria of the set of filter criteria may comprise a second plurality of codes from the multiplicity of available codes and at least one filter criteria of the set of filter criteria may comprise a third plurality of codes from the multiplicity of available codes. In this alternative, the filtering of the received market data may comprise comparing the codes of the first plurality of codes with the codes of the second and third pluralities of codes to determine whether a match occurs. The codes of the second plurality of codes may be trading suspension codes and the codes of the third plurality of codes may be trading resume codes.

Still alternatively, the market data may comprise a plurality of codes from a multiplicity of available codes and each filter criteria of the set of filter criteria comprises a subset of codes from the multiplicity of available codes. In this alternative, the filtering of the received market data may comprise comparing the codes of the plurality of codes with each subset of codes to determine whether a match occurs; and if, for a specific code of the plurality of codes, no match occurs, sending an alert message to the specific market place indicating that an unknown code has been received. An update message may be received from the specific market place indicating the meaning of the specific code of the plurality of codes; and the multiplicity of available codes may be updated using the update message.

The processor-implemented method may further comprise qualifying the received market data to determine accuracy and correctness of the received market data. The qualifying may comprise qualifying the received market data to determine, whether a listing of the plurality of listings has been renamed.

The processor-implemented method may further comprise monitoring market data supply of at least one selected market place to determine an occurring supply outage. If a supply outage occurs, a corresponding indication of the occurring supply outage may be provided in real-time.

The processor-implemented method may further comprise monitoring index information for the at least one selected market place. It may be determined that a supply outage occurs, if the index information is not received within a predetermined time interval.

The processor-implemented method may further comprise displaying, in real-time, the status information indicating whether trading of the at least one listing has been suspended or resumed at the specific market place.

The displaying may comprise displaying, in real-time, an alert message if it is determined that trading of the at least one listing has been suspended at the specific market place. The displaying of the alert message may comprise creating a pop-up window for displaying the alert message therein, the pop-up window being adapted to be closed only in response to user interaction. Furthermore, an audible alert may be performed if it is determined that trading of the at least one listing has been suspended at the specific market place. Additionally, a flag may be attached to the received market data indicating a suspension of the at least one listing, if it is determined that trading of the at least one listing has been suspended at the specific market place.

The processor-implemented method may further comprise providing a real-time market data information stream comprising the status information

According to another aspect of the present invention, there is provided a computer-readable medium comprising computer-executable instructions for implementing a method of filtering market data generated at a market place, for providing real-time trading status information, when run on a computer.

According to still another aspect of the present invention, there is provided a computer system for filtering market data generated at a market place to provide real-time trading status information. The computer system comprises a memory device for storing a plurality of listings, each listing associated with a corresponding market place and traded at the associated market place; and a set of filter criteria suitable for filtering market data to determine the trading status information; an input unit for receiving market data for at least one listing of the stored plurality of listings, the at least one listing being associated with a specific market place; a processor adapted to filter the received market data in accordance with the stored set of filter criteria to determine in real-time, whether trading of the at least one listing has been suspended or resumed at the specific market place; and an output unit for providing, in real-time, the status information indicating whether trading of the at least one listing has been suspended or resumed at the specific market place.

The processor may further be adapted to attach a flag to the received market data indicating a suspension of the at least one listing, if it is determined that trading of the at least one listing has been suspended at the specific market place.

The received market data is preferably real-time market data. The market place may be a financial, stock, derivatives or commodity exchange, ECN or any other market place that generates market data subjected to electronic dissemination.

The providing of the plurality of listings may comprise providing a plurality of dual listings, each dual listing associated with a primary market place and a secondary market place and traded at the primary and secondary market places. Accordingly, the market data may be received for at least one dual listing of the plurality of dual listings associated with a specific primary market place representing the specific market place. Thus, providing of the status information may comprise providing to the secondary market place, in real-time, the status information indicating whether trading of the at least one dual listing has been suspended or resumed at the specific primary market place.

The set of filter criteria comprises at least one of a filter criteria for filtering the market data to determine occurrence of at least one predetermined trading suspension code; a filter criteria for filtering the market data to determine occurrence of at least one predetermined trading resume code; a filter criteria for filtering the market data to determine a market type; and a filter criteria for filtering the market data to determine a data field of the market data to be filtered.

The market data may comprise a first plurality of codes from a multiplicity of available codes. Furthermore, at least one filter criteria of the set of filter criteria may comprise a second plurality of codes from the multiplicity of available codes. The filtering of the received market data may comprise comparing the codes of the first plurality of codes with the codes of the second plurality of codes to determine whether a match occurs. The codes of the second plurality of codes may be trading suspension codes or trading resume codes.

Alternatively, the market data may comprise a first plurality of codes from a multiplicity of available codes, at least one filter criteria of the set of filter criteria may comprise a second plurality of codes from the multiplicity of available codes and at least one filter criteria of the set of filter criteria may comprise a third plurality of codes from the multiplicity of available codes. In this alternative, the filtering of the received market data may comprise comparing the codes of the first plurality of codes with the codes of the second and third pluralities of codes to determine whether a match occurs. The codes of the second plurality of codes may be trading suspension codes and the codes of the third plurality of codes may be trading resume codes.

Still alternatively, the market data may comprise a plurality of codes from a multiplicity of available codes and each filter criteria of the set of filter criteria comprises a subset of codes from the multiplicity of available codes. In this alternative, the filtering of the received market data may comprise comparing the codes of the plurality of codes with each subset of codes to determine whether a match occurs; and if, for a specific code of the plurality of codes, no match occurs, sending an alert message to the specific market place indicating that an unknown code has been received. An update message may be received from the specific market place indicating the meaning of the specific code of the plurality of codes; and the multiplicity of available codes may be updated using the update message.

Furthermore, the processor may be adapted to qualify the received market data to determine accuracy and correctness of the received market data. The processor may further be adapted to qualify the received market data to determine, whether a listing of the plurality of listings has been renamed.

The processor may be adapted to monitor market data supply of at least one selected market place to determine an occurring supply outage. If a supply outage occurs, a corresponding indication of the occurring supply outage may be provided in real-time via the output unit.

The processor may further be adapted to monitor index information for the at least one selected market place. The processor may determine that a supply outage occurs, if the index information is not received within a predetermined time interval.

The computer system may further comprise a display device for displaying, in real-time, the status information indicating whether trading of the at least one listing has been suspended or resumed at the specific market place.

The computer system may further comprise a speaker unit for performing an audible alert if it is determined that trading of the at least one listing has been suspended at the specific market place.

The output unit may be adapted to provide a real-time market data information stream comprising the status information.

### DESCRIPTION OF THE DRAWINGS

In the accompanying drawings, preferred embodiments of the invention are described in more detail. The drawings are not to be construed as limiting the present invention to only the illustrated and described examples of how the invention can be made and used. Further features and advantages will become apparent from the following and more particular description of the invention, as illustrated in the accompanying drawings, wherein:
- FIG. 1: is a block diagram illustrating a market data processing environment according to an aspect of the present invention;
- FIG. 2: is a block diagram illustrating the market data processing system of FIG. 1 in more detail;
- FIG. 3: is a block diagram illustrating additional components of the market data processing environment of FIG. 1;
- FIG. 4: is an illustration of a graphical user interface showing an exemplary output of the market data processing system of FIG. 2;
- FIG. 5: is an illustration of the graphical user interface of FIG. 4 with an exemplary graphical alert message representation; and
- FIG. 6: is a flowchart illustrating a method of filtering market data according to another aspect of the present invention;

### DETAILED DESCRIPTION OF THE DRAWINGS

The different aspects of the present invention will be described in the following with reference to the accompanying figure drawings, wherein like elements and structures are designated by like reference numerals.

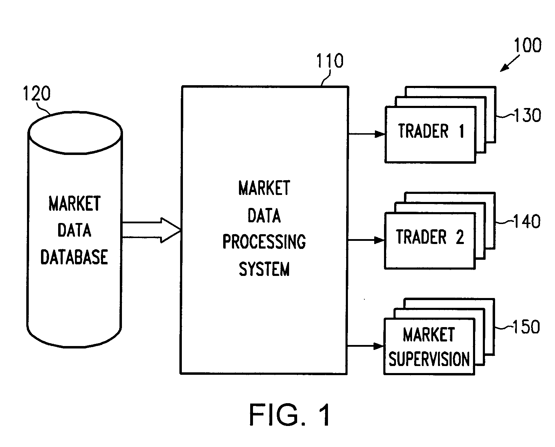

Referring now to FIG. 1, a market data processing environment 100 comprising a market data processing system 110, a market data database 120, trader units 130, 140 and a market supervision unit 150 is shown.

Market data processing system 110 is embodied as a computer system for filtering market data generated at a market place to provide real-time trading status information. However, it is to be noted that other embodiments are possible where the market data processing system 110 is implemented using more than one separate but interconnected computer systems.

Market data may be made available via any suitable data source and is, preferably, stored in a database 120 of a corresponding provider or vendor, which may allow subscription to market data providing services. Market data subscription is, for instance, via Reuters or Bloomberg. Market data is also available via other data sources using current standards like, e.g. SSL and TIBCO Rendezvous

By way of example, market data is subscribed by Reuters and provided via Reuters Triarch® to market data processing system 110. Based on the process power of the market data processing system 110, a predefined number of listings can be subscribed on current Reuters technology on real-time basis. Market data processing system 110 is flexibly arranged to process more market data on other listings dependent on system specification and requirements.

Market data processing system 110 is operable to monitor a plurality of configured listings by means of a suitable application, for instance, Vistasource (Applix) or Excel (Microsoft ®). In case of observed suspension, resumption or unknown status code an update representing trading status information for a corresponding listing is provided. For example, for every exchange organization or all observed listings only one single update is created and provided. Therefore, for thousands of observed listings only a single update has to be handled by subsequent systems. Market data processing system 110 is further operable to manage the updates, e.g., all suspension and other information updates, together for one International Security Identification Number (ISIN).

The updates, i.e., the trading status information may be provided to trader units 130, 140 or to a market supervision unit 150. Every trader or market supervision may use the received trading status information in a desired way using a notification front-end like Reuter's page or Web-based front-end.

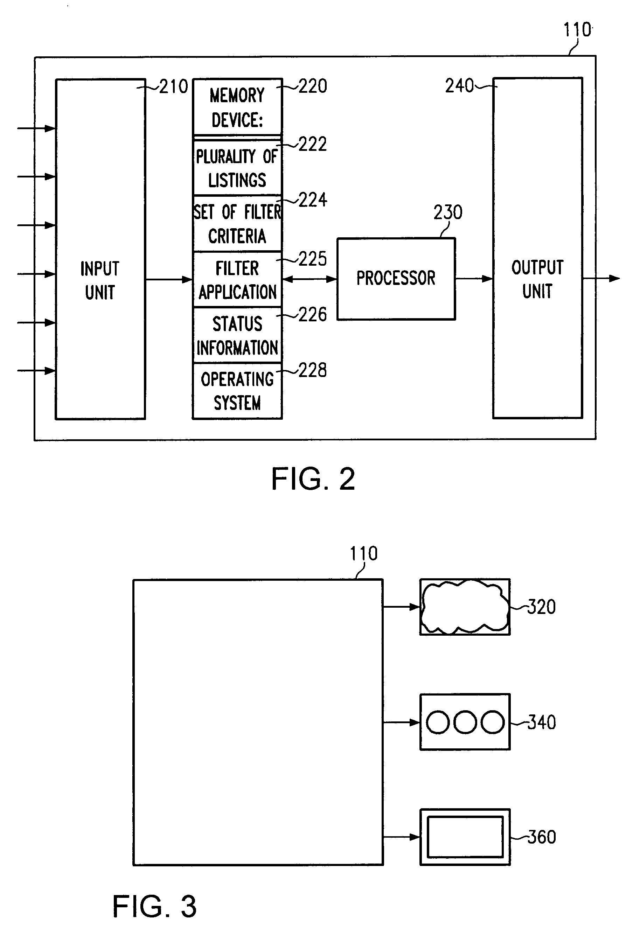

Referring now to FIG. 2, market data processing system 110 is illustrated in more detail comprising an input unit 210, a memory device 220, a processor 230 and an output unit 240.

Memory device 220 is operable to store a plurality of listings 222. Each listing is associated with a corresponding market place and traded at the associated market place. The plurality of listings 222 may comprise a plurality of dual listings, each dual listing being associated with a primary market place and a secondary market place and traded at the primary and secondary market places.

Memory device 220 is further operable to store a set of filter criteria 224 suitable for filtering market data to determine trading status information. The set of filter criteria 224 may comprise one or more of a filter criteria for filtering the market data to determine occurrence of at least one predetermined trading suspension code; a filter criteria for filtering the market data to determine occurrence of at least one predetermined trading resume code; a filter criteria for filtering the market data to determine a market type; a filter criteria for filtering the market data to determine a data field of the market data to be filtered; and a filter criteria for filtering the market data to determine whether the at least one listing is representative for an index at the specific market place. Furthermore, each filter criteria of the set of filter criteria may comprise a subset of codes from a multiplicity of available codes. The available codes may comprise trading suspension codes or trading resume codes.

According to one embodiment of the present invention, five different filter criteria are provided, each of which is implemented, for purposes of illustration, in the form of a list. Each list comprises a subset of codes from the multiplicity of available codes.

A first list illustrated in Table 1 represents an exemplary list of instrument codes. Each instrument indicates a listing at a special exchange that is identified by a vendor's propriety identification system or a national/international standardisation as, e.g., the vendor's instrument codes, WKN, ISIN, or any other unique identification of a listing. If, for instance, the vendor of the market data is Reuters, the vendor codes are so called RIC-codes (Reuters Instrument Codes). These RIC-codes are propriety of Reuters but define an industry standard next to ISIN. Other vendors have other code systems. The identification standard that is most useful to identify the listings in the processed market data may be used. For purposes of illustration, Table 1 defines a choice of listings for which to receive additional market data and process it later on, i.e., only if received market data is associated with one of the listed instruments, the received market data will be processed.

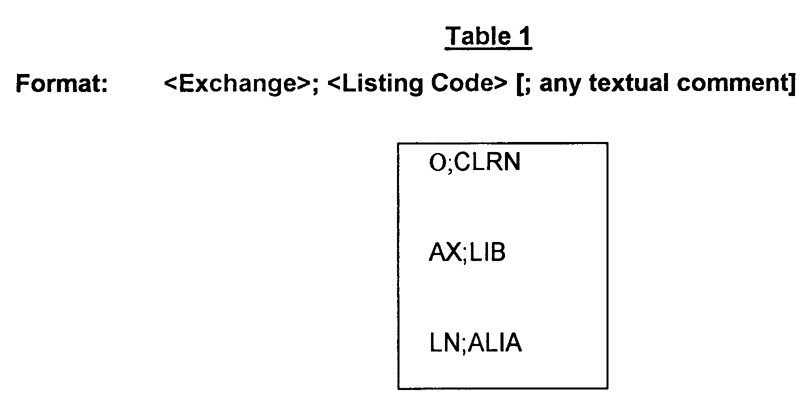

A second list illustrated in Table 2 represents an exemplary list of suspension codes. Each entry in this list indicates a suspension code for a given exchange.

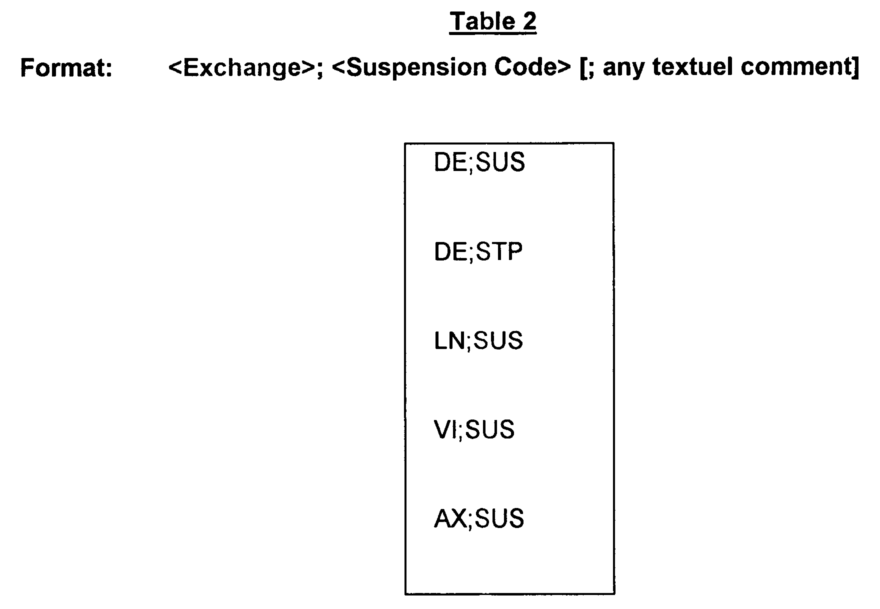

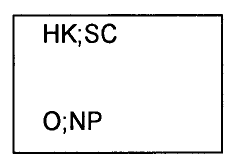

A third list illustrated in Table 3 represents an exemplary list of trading codes. Each entry in this list indicates a code that - in case of observation - has to be ignored for suspension indication for a given exchange.

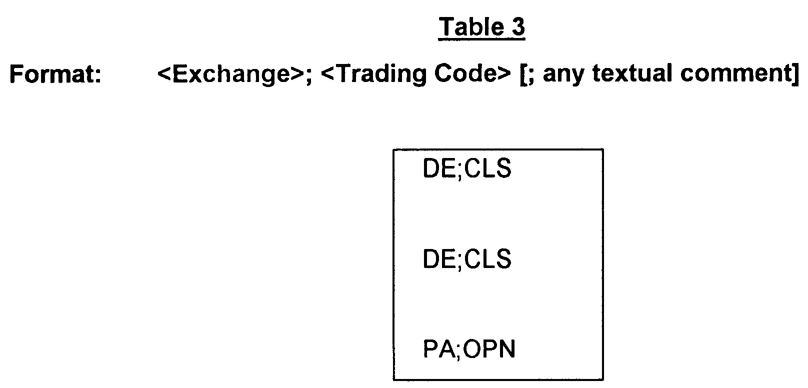

A fourth list illustrated in Table 4 represents an exemplary list of index codes. Each index denominates a listing that is representative for market data of the corresponding exchange. Updates in theses listings may be used for the mere purpose of ensuring real-time market data supply.

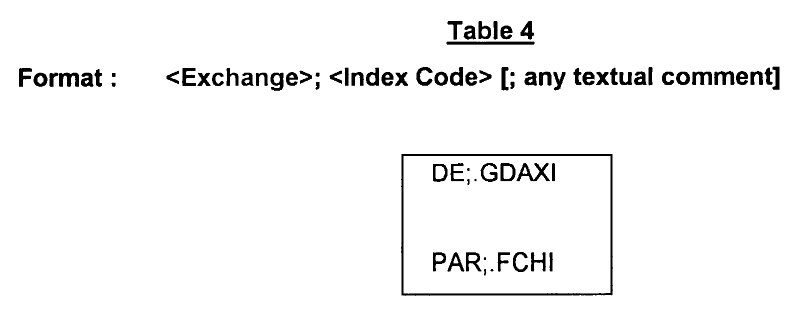

A fifth list illustrated in Table 5 represents an exemplary list of field identifier codes. Market data is frequently being sent via vendor feed information in fields. Fields are identified with field identifiers (FIDs). Some exchanges define and use own fields with exclusive FIDs, others use more common FIDs. For instance, FID 119 is exclusively reserved in Reuters for NASDAQ, while all other exchanges allocate only FIDs 118 and 131. In a special list for every exchange such fields resp. field identifiers are listed. This "FID list" defines for all exchanges the portion of market data to be used for processing.

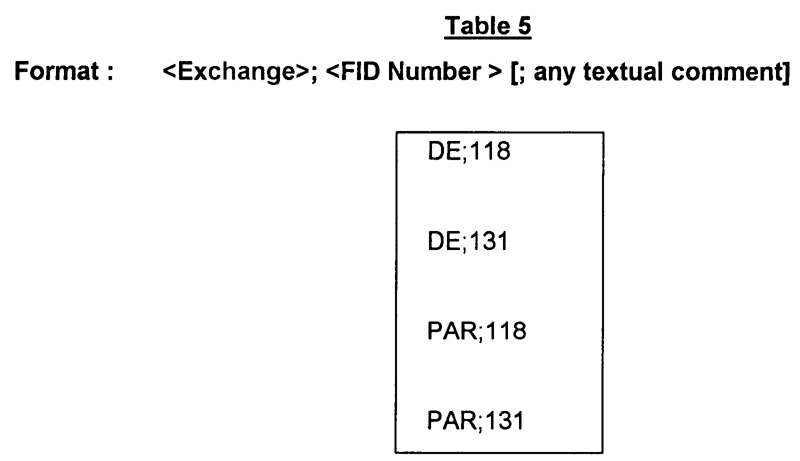

In the example according to Table 5, for all listings of exchanges DE and PAR observation is done in FIDs 118 and 131.

Memory device 220 may further be operable to store a filter application program 225 for implementing a method of filtering market data generated at a market place, for providing real-time trading status information 226. Alternatively, the filter application program may be stored on any other type of computer-readable medium comprising a CD-ROM and a floppy disk.

Memory device 220 may further be operable to store the real-time trading status information 226. Memory device 220 may further be operable to store an operating system 228, for instance, Windows® NT or UNIX. However, it is to be noted that other operating systems could be used as well.

Input unit 210 is operable to receive market data for at least one listing of the stored plurality of listings 222. The received market data is preferably real-time market data. The market data may comprise a plurality of codes from the multiplicity of available codes. The at least one listing is associated with a specific market place, which may be a financial, stock, derivatives or commodity exchange, ECN or any other market place that generates market data subjected to electronic dissemination.

Processor 230 is operable to filter the received market data in accordance with the stored set of filter criteria 224 to determine in real-time, whether trading of the at least one listing has been suspended or resumed at the specific market place. If it is determined that trading of the at least one listing has been suspended at the specific market place, a flag may be attached to the received market data indicating a suspension of the at least one listing.

Processor 230 may further be operable to qualify the received market data to determine accuracy and correctness of the received market data. The processor 230 may further be operable to qualify the received market data to determine, whether a listing of the plurality of listings has been renamed.

Processor 230 may further be operable to monitor market data supply of at least one selected market place to determine an occurring supply outage. If a supply outage occurs, a corresponding indication of the occurring supply outage may be provided in real-time via the output unit.

Processor 230 may further be operable to monitor index information for the at least one selected market place. The processor 230 may determine that a supply outage occurs, if the index information is not received within a predetermined time interval.

Output unit 240 is operable to provide, in real-time, the status information 226 indicating whether trading of the at least one listing has been suspended or resumed at the specific market place. Output unit 240 may further be operable to provide a real-time market data information stream comprising the status information 226.

Referring now to FIG. 3, market data processing system 110 is illustrated with additional components, which may be incorporated into market data processing system 110 or embodied separately from market data processing system 110 within a market data processing environment as, for example, market data processing environment 100 of FIG. 1. The additional components exemplarily comprise a communications unit 320, a speaker unit 340 and a display device 360.

The communications unit 320 is operable to provide connections, e.g., to the Internet or to a broadcasting base station for disseminating the determined trading status information. By using the communications unit 320 the real-time market data information stream comprising the status information may be disseminated. The speaker unit 340 is operable to perform an audible alert if it is determined that trading of the at least one listing has been suspended at the specific market place. The display device 360 is operable to display, in real-time, the status information 226 indicating whether trading of the at least one listing has been suspended or resumed at the specific market place.

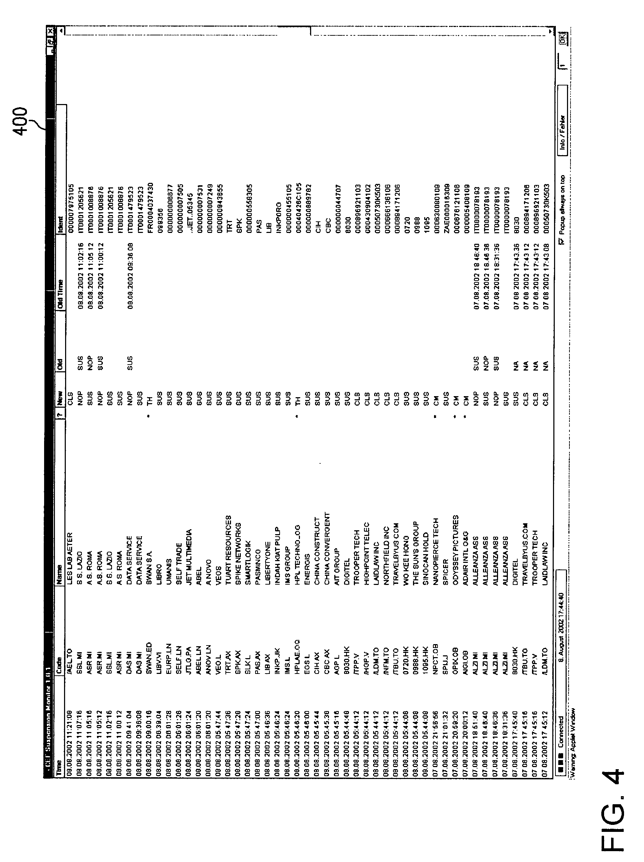

FIG. 4 shows an illustration of a graphical user interface 400 showing an output of the market data processing system of FIG. 2. Graphical user interface 400 illustrates by way of example a plurality of dual listings, for which suspensions have been detected according to the present dimension.

Graphical user interface 400 may be displayed on suitable display devices of traders as, e.g., trading units 130, 140 of FIG. 1, as well as on suitable display devices of market supervision as, e.g., market supervision 150 of FIG. 1. Thus, market supervision of a specific secondary market may immediately suspend trading of a given dual listing, if suspension of this dual listing has been detected at the primary market place.

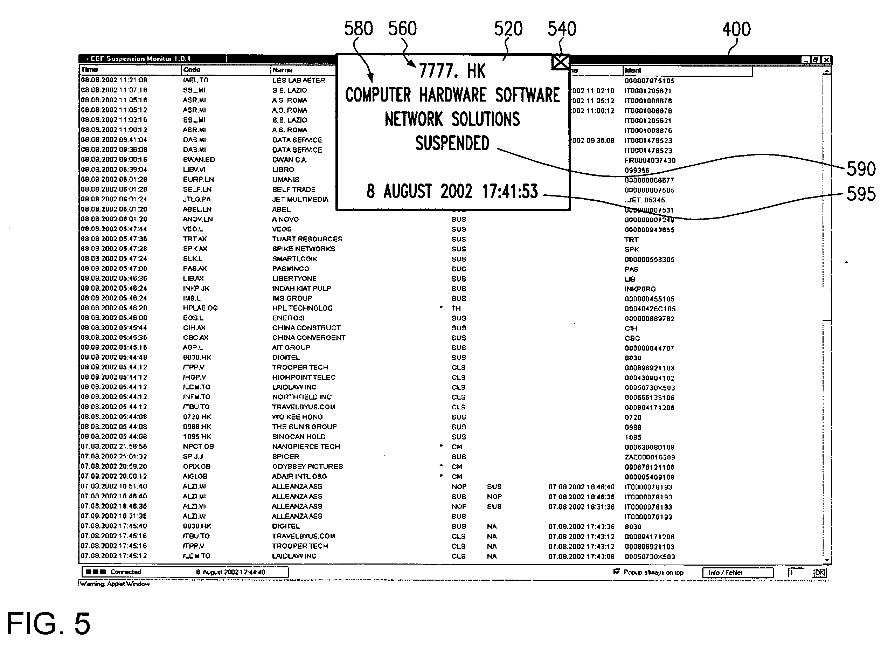

FIG. 5 shows an illustration of the graphical user interface 400 of FIG. 4 with an exemplary graphical alert message representation 520. Graphical alert message representation 520 may be displayed in real-time, if it is determined that trading of the at least one listing has been suspended at the specific market place. Exemplary graphical alert message representation 520 comprises an indication 560 of the observed listing, which has been suspended, a full company name 580, which may be derived from indication 560, a suspension indication 590 and a date and time 595 of observed suspension indicating status.

Graphical alert message representation 520 is preferably implemented as a pop-up window for displaying the alert message therein, the pop-up window being adapted to be closed only in response to user interaction. Therefore, the user may be required to position a mouse pointer onto a predefined area 540 within graphical alert message representation 520 and to press a predetermined mouse button to close graphical alert message representation 520. Alternatively, pressing a predetermined combination of buttons or a single button, as well as introducing a predefined spoken command into the market data processing system or any other suitable user interaction may be performed to close graphical alert message representation 520.

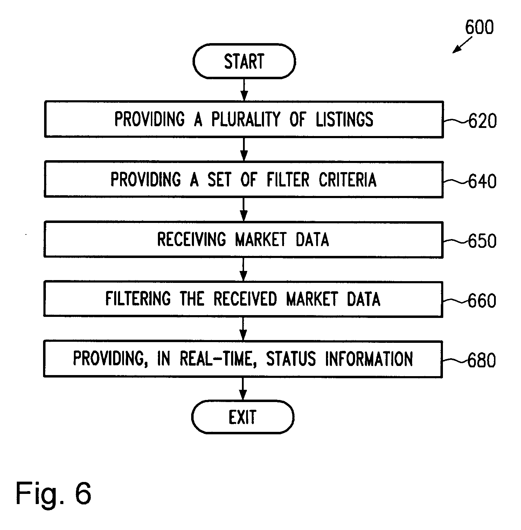

FIG. 6 shows a flowchart illustrating a processor-implemented method 600 of filtering market data generated at a market place, for providing real-time trading status information. The market place may be a financial, stock, derivatives or commodity exchange, ECN or any other market place that generates market data subjected to electronic dissemination.

In a step 620, a plurality of listings is provided. Each listing is associated with a corresponding market place and traded at the associated market place. Step 620 may further comprise providing a plurality of dual listings. Each dual listing is associated with a primary market place and a secondary market place and traded at the primary and secondary market places.

In a step 640, a set of filter criteria suitable for filtering market data to determine the trading status information is provided. The set of filter criteria may comprise at least one of a filter criteria for filtering the market data to determine occurrence of at least one predetermined trading suspension code; a filter criteria for filtering the market data to determine occurrence of at least one predetermined trading resume code; a filter criteria for filtering the market data to determine a market type; and a filter criteria for filtering the market data to determine a data field of the market data to be filtered.

In a step 650, market data is received for at least one listing of the plurality of listings associated with a specific market place. The received market data is preferably real-time market data. Furthermore, the market data may be received for at least one dual listing of a plurality of dual listings associated with a specific primary market place representing the specific market place.

Step 650 may further comprise qualifying the received market data to determine accuracy and correctness of the received market data. The qualifying may comprise qualifying the received market data to determine, whether a listing of the plurality of listings has been renamed.

Furthermore, market data supply of at least one selected market place may be monitored to determine an occurring supply outage. If a supply outage occurs, a corresponding indication of the occurring supply outage may be provided in real-time. Furthermore, index information for the at least one selected market place may be monitored. Thus, it may be determined that a supply outage occurs, if the index information is not received within a predetermined time interval.

Furthermore, to ensure steady uptime and functionality, heartbeat information may be send. Heartbeat messages are created and indicate the sanity for all exchanges. Heartbeats are being sent from the market data processing system to the corresponding data dissemination system, i.e., data provider, to ensure suspension observation is up and running. From the data dissemination system these heartbeats are disseminated within the market data. These are enriched with information on technical connection with the dissemination system. Missing of a heartbeat may be interpreted as an outage of market data supply. At a realised real-time push front-end a connection indicator indicates the status of all available types of heartbeat information.

Furthermore, for quality purposes a counter on all observed occurrences is introduced and disseminated. Therefore the market data processing system according to the present invention is able to detect missing messages and double sending.

In a step 660, the received market data is filtered in accordance with the set of filter criteria to determine in real-time, whether trading of the at least one listing has been suspended or resumed at the specific market place.

The received market data may comprise a first plurality of codes from a multiplicity of available codes. Filtering in step 660 may then be performed dependent on the provided set of filter criteria. For purposes of illustration, three exemplary alternative filtering aspects are briefly described below.

According to a first aspect, at least one filter criteria of the set of filter criteria comprises a second plurality of codes from the multiplicity of available codes, the codes of the second plurality of codes being trading suspension codes or trading resume codes. In this case, the filtering of the received market data preferably comprises comparing the codes of the first plurality of codes with the codes of the second plurality of codes to determine whether a match occurs.

Alternatively, at least one filter criteria of the set of filter criteria may comprise a second plurality of codes from the multiplicity of available codes and at least one filter criteria of the set of filter criteria may comprise a third plurality of codes from the multiplicity of available codes, the codes of the second plurality of codes being trading suspension codes and the codes of the third plurality of codes being trading resume codes. In this alternative, the filtering of the received market data preferably comprises comparing the codes of the first plurality of codes with the codes of the second and third pluralities of codes to determine whether a match occurs.

Still alternatively, each filter criteria of the set of filter criteria comprises a subset of codes from the multiplicity of available codes. In this alternative, the filtering of the received market data preferably comprises comparing the codes of the first plurality of codes with each subset of codes to determine whether a match occurs; and if, for a specific code of the plurality of codes, no match occurs, sending an alert message to the specific market place indicating that an unknown code has been received. An update message may be received from the specific market place indicating the meaning of the specific code of the plurality of codes; and the multiplicity of available codes may be updated using the update message.

In a step 680, the status information is provided in real-time, indicating whether trading of the at least one listing has been suspended or resumed at the specific market place. If the status information is associated with a dual listing, the status information may be provided to the secondary market place, in real-time, indicating whether trading of the at least one dual listing has been suspended or resumed at the specific primary market place.

Step 680 may further comprise providing a real-time market data information stream comprising the status information. Step 680 may further comprise displaying, in real-time, the status information indicating whether trading of the at least one listing has been suspended or resumed at the specific market place. Furthermore, an alert message may be displayed in real-time, if it is determined that trading of the at least one listing has been suspended at the specific market place. In this event, a pop-up window may be created for displaying the alert message therein. The pop-up window may be adapted to be closed only in response to user interaction.

Step 680 may further comprise performing an audible alert if it is determined that trading of the at least one listing has been suspended at the specific market place. Additionally, a flag may be attached to the received market data indicating a suspension of the at least one listing, if it is determined that trading of the at least one listing has been suspended at the specific market place.

In the following, a detailed embodiment of steps 660 and 680 is described with reference to the above explanations with respect to FIGs. 1 to 5.

To consolidate all trading status information in discrete events, plural types of events may be provided in real-time: a suspension indication, a resume indication, an error event, and the notification of a yet unknown code. Besides the mere type of an event, information on the following may be provided with the status information: a code for a corresponding listing of the plurality of provided listings according to whatever standard is used, a full name of the listing, time and date of event occurrence, a current determined code, time and date of a last determination of this code and a last determined code. Each one of the current and the last determined code can be one of "suspension", "trading" or "unknown". "Suspension" indicates that the code is contained in the suspension list, "trading" indicates that the code is contained in the trading list and "unknown" indicates that the code is neither in the suspension list nor in the trading list.

The last determined code is preferably stored on a single listing basis. In case of an update for a monitored listing of the provided plurality of listings, a last determined code and a newly determined code are available.

The occurrence of relevant received market data may be determined according to the following rules, e.g., by means of a UNIX based spreadsheet program like Applix/Vistaware. The following enumeration is not to be understood as a predetermined order of execution. Instead, the following rules may be applied independent from each other in an arbitrary order whereby also an arbitrary subset of the rules may be applied.
(1) For every listing of the provided plurality of listings, only a portion of the received market data defined in a predetermined FID is of interest. If a determined code in the received market data for a specific listing has not been changed, the status of the listing has not changed. Thus, the market data for the specific listing may be ignored and no action is to be taken. This happens for approximately 99.9% of the received market data, as in a majority of cases, no new status is send because, for example, only the market data for price information has been changed, or if the new code for the specific listing in the received market data was the same as the last determined code.
(2) If the currently determined code is in the suspension list and the last determined code was not in the suspension list, a suspension alert message is provided. This is performed independent of the previous determined code, i.e., independent of the previous status.
(3) If for the specific listing at this exchange the current determined code is in the trading list, then is has to be verified, whether for this listing at this exchange a suspension code has previously been determined in the last determined code. Only if last determined code is a suspension code, a trading resume message is provided.
(4) If the current determined code is "unknown", an unknown message may be provided.
(5) If no current determined code can be determined for the specific listing, it is assumed that an erroneous status occurs on the listing. Thus, an error message may be provided for the listing.
(6) If no new market data was received for a listing included in an index list of a given market place for a predefined time, then an error message may be provided for this listing.

For purposes of illustration, the five filter criteria that define instances of the above rules have been described in more detail as lists above. As indicated above, these lists have the following structures, whereas the order of the entries in the lists is not relevant:

| | |
|---|---|
| Suspension list | <exchange> <suspension code> |
| Trading list | <exchange> <trading code> |
| Instrument list | <exchange> <listing code> |
| Index list | <exchange> <index code> |
| FID list | <exchange> <FID> |

For all lists multiple entries per first or second entry is allowed. In most cases only a single main market becomes monitored. Providing several listings in the configuration introduces monitoring several markets at the same time.

Furthermore, several listings at one exchange can be monitored. Several suspension codes can be defined for one exchange. Several FIDs for one exchange can be subjected to filtering. Arbitrary large lists can be processed. Filtering is not based on order or number of occurrences.

All rules on processing an occurrence of a code from received market data are relevant to every FID in the FID list. There is no dependence build on the occurrence of a code in a special FID. The filtering is specific to a set of FIDs and a set of suspension codes. This design is important because no prediction on the occurrence of in a predetermined field representing an FID can be made. Whether or not a code appears in one FID or another is dependent on the actual situation. In a concrete situation there might be more upcoming additional information to transport with the market data than FIDs are available in the market data structure.

The checking of rules needs a certain effort. The amount of incoming market data in form of messages can generate a tremendous effort that exceeds the capability of an implementing computer system. Therefore a netting mechanism may be activated that guarantees processing of the chronological last queued market data message.

As all determined suspension and trading-halts are, in general, enduring for minutes if not weeks, it is sufficient if providing of trading status information is possible within seconds. Accordingly, in the context of the present invention processing in real-time, e.g., providing trading status information in real-time, should be understood as processing within seconds after occurrence of an event. This should preferably be immediately after occurrence, but not later than 15 seconds afterwards.

Furthermore, in case new codes are released from exchanges or vendors, there is not always a published explanation or literal presentation available. Therefore processing of absolute numbers instead of literal codes is possible as well. In general, letters and special characters are used to define codes for additional data.

An observed occurrence of a new code leads to an unknown message for a corresponding listing. This requests a determination on whether this new code is a suspension code or in respect to suspension a trading resume code. To invoke the above described desired behaviour, a new entry may be added to the corresponding list and the filtering may be continued with the thus updated list.

In case new listings at a given exchange have to be considered in filtering, adding entries with the new listing codes to the instrument list has to be done. In case these new listings come from a new exchange, updates must also be performed in the FID list and the index list.

Providing of an error message indicates a problem with data supply, de-listing of a company, i.e., a listing at a given exchange or changing of the listing's identification. During start-up of filtering, an automated plausibility check of all five lists according to some rules may be performed. In case of failed checks an old set of lists is used. This is to prevent outage or breakdown of the mechanism in case of configuration errors.

To increase operating safety a dual rail design may be implemented. Accordingly, all components are redundant and switch over from one module to another in case of a failure.

Determined status changes may be stored in a database to obtain a list of all active suspensions at a given exchange. Accordingly, a single entry journal functionality may be implemented for market supervisors in charge of suspension monitoring, which may thus be disburdened from manual recording suspensions and resuming.

## Claims

1. A processor-implemented method of filtering market data generated at a market place, for providing real-time trading status information, the method comprising:
providing a plurality of listings, each listing associated with a corresponding market place and traded at the associated market place;
providing a set of filter criteria suitable for filtering market data to determine the trading status information;
receiving market data for at least one listing of the plurality of listings associated with a specific market place;
filtering the received market data in accordance with the set of filter criteria to determine in real-time, whether trading of the at least one listing has been suspended or resumed at the specific market place; and
providing, in real-time, the status information indicating whether trading of the at least one listing has been suspended or resumed at the specific market place.

2. The method of claim 1, wherein the received market data is real-time market data.

3. The method of claim 1 or 2, wherein the market place is a financial, stock, derivatives or commodity exchange, ECN or any other market place that generates market data subjected to electronic dissemination.

4. The method of one of the claims 1 to 3, wherein the providing of the plurality of listings comprises:
providing a plurality of dual listings, each dual listing associated with a primary market place and a secondary market place and traded at the primary and secondary market places.

5. The method of claim 4, wherein the received market data is received for at least one dual listing of the plurality of dual listings associated with a specific primary market place representing the specific market place.

6. The method of claim 5, wherein the providing of the status information comprises:
providing to the secondary market place, in real-time, the status information indicating whether trading of the at least one dual listing has been suspended or resumed at the specific primary market place.

7. The method of one of the claims 1 to 6, wherein the set of filter criteria comprises at least one of:
a filter criteria for filtering the market data to determine occurrence of at least one predetermined trading suspension code;
a filter criteria for filtering the market data to determine occurrence of at least one predetermined trading resume code;
a filter criteria for filtering the market data to determine a market type; and
a filter criteria for filtering the market data to determine a data field of the market data to be filtered.

8. The method of one of the claims 1 to 7, wherein the market data comprises a first plurality of codes from a multiplicity of available codes and at least one filter criteria of the set of filter criteria comprises a second plurality of codes from the multiplicity of available codes, and wherein the filtering of the received market data comprises:
comparing the codes of the first plurality of codes with the codes of the second plurality of codes to determine whether a match occurs.

9. The method of claim 8, wherein the codes of the second plurality of codes are trading suspension codes.

10. The method of claim 8, wherein the codes of the second plurality of codes are trading resume codes.

11. The method of one of the claims 1 to 7, wherein the market data comprises a first plurality of codes from a multiplicity of available codes, at least one filter criteria of the set of filter criteria comprises a second plurality of codes from the multiplicity of available codes and at least one filter criteria of the set of filter criteria comprises a third plurality of codes from the multiplicity of available codes, and wherein the filtering of the received market data comprises:
comparing the codes of the first plurality of codes with the codes of the second and third pluralities of codes to determine whether a match occurs.

12. The method of claim 11, wherein the codes of the second plurality of codes are trading suspension codes and the codes of the third plurality of codes are trading resume codes.

13. The method of one of the claims 1 to 7, wherein:
the market data comprises a plurality of codes from a multiplicity of available codes and each filter criteria of the set of filter criteria comprises a subset of codes from the multiplicity of available codes, and
the filtering of the received market data comprises:
comparing the codes of the plurality of codes with each subset of codes to determine whether a match occurs; and
if, for a specific code of the plurality of codes, no match occurs, sending an alert message to the specific market place indicating that an unknown code has been received.

14. The method of claim 13, further comprising:
receiving an update message from the specific market place indicating the meaning of the specific code of the plurality of codes; and
updating the multiplicity of available codes using the update message.

15. The method of one of the claims 1 to 14, further comprising:
qualifying the received market data to determine accuracy and correctness of the received market data.

16. The method of claim 15, wherein the qualifying comprises:
qualifying the received market data to determine, whether a listing of the plurality of listings has been renamed.

17. The method of one of the claims 1 to 16, further comprising:
monitoring market data supply of at least one selected market place to determine an occurring supply outage; and
providing in real-time, if a supply outage occurs, a corresponding indication of the occurring supply outage.

18. The method of claim 17, wherein the monitoring comprises:
monitoring index information for the at least one selected market place; and
if the index information is not received within a predetermined time interval, determining that a supply outage occurs.

19. The method of one of the claims 1 to 18, further comprising:
displaying, in real-time, the status information indicating whether trading of the at least one listing has been suspended or resumed at the specific market place.

20. The method of one of the claims 1 to 19, further comprising:
displaying, in real-time, an alert message if it is determined that trading of the at least one listing has been suspended at the specific market place.

21. The method of claim 20, wherein displaying of the alert message comprises:
creating a pop-up window for displaying the alert message therein, the pop-up window being adapted to be closed only in response to user interaction.

22. The method of one of the claims 1 to 21, wherein the providing of the status information comprises:
providing a real-time market data information stream comprising the status information.

23. The method of one of the claims 1 to 22, further comprising:
performing an audible alert if it is determined that trading of the at least one listing has been suspended at the specific market place.

24. The method of one of the claims 1 to 23, further comprising:
attaching a flag to the received market data indicating a suspension of the at least one listing, if it is determined that trading of the at least one listing has been suspended at the specific market place.

25. A computer-readable medium comprising computer-executable instructions for performing all the steps of the method according to any one of claims 1 to 24, when run on a computer.

26. A computer system for filtering market data generated at a market place to provide real-time trading status information, the computer system comprising:
a memory device for storing a plurality of listings, each listing associated with a corresponding market place and traded at the associated market place; and a set of filter criteria suitable for filtering market data to determine the trading status information;
an input unit for receiving market data for at least one listing of the stored plurality of listings, the at least one listing being associated with a specific market place;
a processor adapted to filter the received market data in accordance with the stored set of filter criteria to determine in real-time, whether trading of the at least one listing has been suspended or resumed at the specific market place; and
an output unit for providing, in real-time, the status information indicating whether trading of the at least one listing has been suspended or resumed at the specific market place.

27. The computer system of claim 26, wherein the received market data is real-time market data.

28. The computer system of claim 26 or 27, wherein the market place is a financial, stock, derivatives or commodity exchange, ECN or any other market place that generates market data subjected to electronic dissemination.

29. The computer system of one of the claims 26 to 28, wherein the plurality of listings comprises a plurality of dual listings, each dual listing associated with a primary market place and a secondary market place and traded at the primary and secondary market places.

30. The computer system of claim 29, wherein the at least one listing is a dual listing of the plurality of dual listings associated with a specific primary market place representing the specific market place.

31. The computer system of claim 30, wherein the output unit is adapted to provide to the secondary market place, in real-time, the status information indicating whether trading of the at least one dual listing has been suspended or resumed at the specific primary market place.

32. The computer system of one of the claims 26 to 31, wherein the set of filter criteria comprises at least one of:
a filter criteria for filtering the market data to determine occurrence of at least one predetermined trading suspension code;
a filter criteria for filtering the market data to determine occurrence of at least one predetermined trading resume code;
a filter criteria for filtering the market data to determine a market type; and
a filter criteria for filtering the market data to determine a data field of the market data to be filtered.

33. The computer system of one of the claims 26 to 32, wherein the market data comprises a first plurality of codes from a multiplicity of available codes and at least one filter criteria of the set of filter criteria comprises a second plurality of codes from the multiplicity of available codes, and wherein the processor is adapted to compare the codes of the first plurality of codes with the codes of the second plurality of codes to determine whether a match occurs.

34. The computer system of claim 33, wherein the codes of the second plurality of codes are trading suspension codes.

35. The computer system of claim 33, wherein the codes of the second plurality of codes are trading resume codes.

36. The computer system of one of the claims 26 to 32, wherein the market data comprises a first plurality of codes from a multiplicity of available codes, at least one filter criteria of the set of filter criteria comprises a second plurality of codes from the multiplicity of available codes and at least one filter criteria of the set of filter criteria comprises a third plurality of codes from the multiplicity of available codes, and wherein the processor is adapted to compare the codes of the first plurality of codes with the codes of the second and third pluralities of codes to determine whether a match occurs.

37. The computer system of claim 36, wherein the codes of the second plurality of codes are trading suspension codes and the codes of the third plurality of codes are trading resume codes.

38. The computer system of one of the claims 26 to 32, wherein the market data comprises a plurality of codes from a multiplicity of available codes and each filter criteria of the set of filter criteria comprises a subset of codes from the multiplicity of available codes, wherein the processor is adapted to compare the codes of the plurality of codes with each subset of codes to determine whether a match occurs; and the output unit is adapted to send an alert message to the specific market place indicating that an unknown code has been received if, for a specific code of the plurality of codes, no match occurs.

39. The computer system of claim 38, wherein the input unit is further adapted to receive an update message from the specific market place indicating the meaning of the specific code of the plurality of codes; and the processor is further adapted to update the multiplicity of available codes using the update message.

40. The computer system of one of the claims 26 to 39, wherein the processor is adapted to qualify the received market data to determine accuracy and correctness of the received market data.

41. The computer system of claim 40, wherein the processor is further adapted to determine, whether a listing of the plurality of listings has been renamed.

42. The computer system of one of the claims 26 to 41, wherein the processor is adapted to monitor market data supply of at least one selected market place to determine an occurring supply outage; and the output unit is adapted to provide in real-time, if a supply outage occurs, a corresponding indication of the occurring supply outage.

43. The computer system of claim 42, wherein the processor is further adapted to monitor index information for the at least one selected market place; and to determine that a supply outage occurs, if the index information is not received via the input unit within a predetermined time interval.

44. The computer system of one of the claims 26 to 43, further comprising:
a display device for displaying, in real-time, the status information indicating whether trading of the at least one listing has been suspended or resumed at the specific market place.

45. The computer system of claim 44, wherein the processor is further adapted to create a pop-up window for displaying the alert message therein, the pop-up window being adapted to be closed only in response to user interaction, the pop-up window for display on the display device.

46. The computer system of one of the claims 26 to 45, further comprising:
a speaker unit for performing an audible alert if it is determined that trading of the at least one listing has been suspended at the specific market place.

47. The computer system of one of the claims 26 to 46, wherein the processor is further adapted to attach a flag to the received market data indicating a suspension of the at least one listing, if it is determined that trading of the at least one listing has been suspended at the specific market place.

48. The computer system of one of the claims 26 to 47, wherein the output unit is adapted to provide a real-time market data information stream comprising the status information.
